# EUROPEAN PATENT APPLICATION

(11) **EP 2 402 151 A2**
(43) Date of publication of application: **04.01.2012**
(21) Application number: 11171154.5
(22) Date of filing: 23.06.2011
(51) Int. Cl.: B32B 5/28, B32B 3/02, B29C 70/04

(54) **Modified Ply Drops for Composite Laminate Materials**

(30) Priority: 29.06.2010 US 826220
(71) Applicant: General Electric Company, Schenectady, NY 12345 (US)
(72) Inventor: Fritz, Peter James, Greenville, SC South Carolina 29615 (US); Driver, Howard Daniel, Greenville, SC South Carolina 29615 (US); Kyriakides, Steven Alan, Greenville, SC South Carolina 29615 (US)
(74) Representative: Bedford, Grant Richard

(57) **Abstract**

A composite laminate material 310, 510, 710, 910 is disclosed. The composite laminate material 310, 510, 710, 910 includes a plurality of adjacently disposed plies 314, 514, 714, 914. At least one of the plies 314, 514, 714, 914 is configured as a terminated ply 320, 520, 720, 920. Additionally, a ply drop 312, 512, 712, 912 is defined by the terminated ply 320, 520, 720, 920, wherein the ply drop 312, 512, 712, 912is modified to reduce stress concentrations within the composite laminate material 310, 510, 710, 910.

## Description

The present subject matter relates generally to composite laminate materials and, more particularly, to modified ply drops for reducing stress concentrations within composite laminate materials.

Composite laminate materials ("laminates") generally consist of a plurality of layers or plies of composite material assembled together to provide the laminate with improved engineering properties. Each ply typically includes a reinforcement material surrounded by and supported within a matrix material. With regard to fiber-reinforced laminates, reinforcement materials generally include high-strength fibers, such as glass or carbon fibers, with suitable matrix materials including various polymer or resin materials, such as such epoxy, polyester or vinyl ester resins. Typically, known reinforcement materials are designed to have both high static and fatigue strengths and, thus, can provide superior stiffness and strength to components formed from laminate materials. Accordingly, laminates are generally used across a wide range of applications to create structural and/or load-bearing components. For example, laminates are often used in the wind turbine industry to create high-strength rotor blades and other rotor blade components. Similarly, laminates are used to manufacture aerospace components, boats, bicycle frames, helicopter blades and various other components that require increased strength and stiffness.

Laminate components are typically manufactured by assembling a plurality of plies one on top of the other within a suitable tool or mold until a required thickness is achieved. However, depending on the desired configuration of the component being manufactured, it is often necessary to taper the thickness of the laminate. For example, thickness tapering may be required to create a component having a desired surface contouring or shape. To provide such thickness tapering, one or more shortened or terminated plies are typically introduced at various locations within the laminate to form ply drops. Each ply drop generally represents a step-reduction in the thickness of the laminate, thereby permitting a laminate material to taper from a thick cross-section to a thinner cross-section.

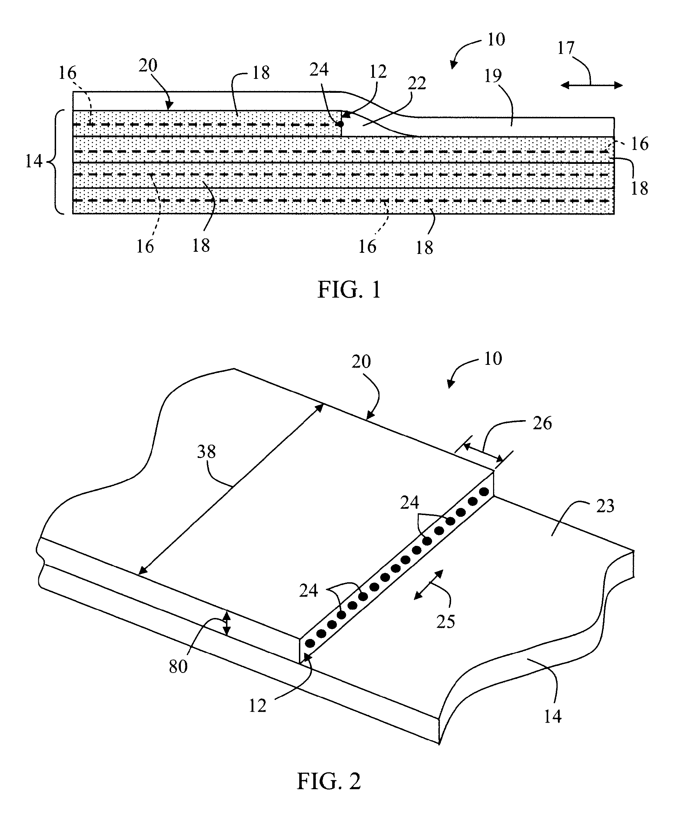

A representative example of the components of a laminate material 10, including a depiction of the tapered effect of a ply drop 12, is illustrated in FIG. 1. The laminate material 10 generally includes a plurality of adjacently disposed internal plies 14 assembled one on top of the other. Each ply 14 includes a plurality of fibers 16 (only one fiber is shown for purposes of clarity) surrounded by and supported within a matrix material 18. As shown, the fibers 16 are unidirectional and oriented within each ply 14 in a longitudinal direction 17. The laminate 10 may also include a cover ply 19, such as a biaxial fiberglass ply, that generally serves as the outer coating for the laminate 10.

To enable a step-reduction or incremental change in the thickness of the laminate 10, a ply drop 12 is typically defined within the laminate 10 by the inclusion of a terminated ply 20. Thus, as shown in FIG. 1, a terminated ply 20 may be disposed between the cover layer 19 and one of the internal plies 14 so as to define an external ply drop 12 within the laminate 10. It should be appreciated that an internal ply drop may be similarly created by placing a terminated ply 20 between adjacent internal plies 14. As shown, the ply drop 12 is generally defined at the end of the terminated ply 20 and, thus, provides a "drop-off" in the thickness of the laminate 10. FIG. 1 also illustrates the gap 22 typically formed between a terminated ply 20 and any adjacent plies, such as the cover ply 19 and internal ply 14, as a result of the sudden drop in thickness caused by the ply drop 12.

Referring now to FIG. 2, the configuration of a conventional ply drop 12 is illustrated. As shown, a conventional ply drop 12 is generally characterized by a straight edge or straight planar surface. The straight edge of the ply drop 12 is typically created by cutting or slicing straight through the terminated ply 20 in the transverse direction 25. As such, a straight edged, perpendicular drop is created between the terminated ply 20 and the outer surface 23 of the adjacent ply 14. This straight edged drop generally offers a very effective geometry for reducing or tapering the thickness of a laminate material 10.

However, while such a straight edge provides for efficient thickness tapering of a laminate 10, this geometry also has detrimental impact on the structural integrity of the laminate 10. In particular, conventional, straight edged ply drops 12 form structural discontinuities within the laminate, which can give rise to a substantial stress concentration at the ply drop 12. This may be particularly true when the gap 22 (FIG. 1) created at the ply drop 12 is inadequately filled with matrix material during subsequent processing of the laminate 10, which results in a void or area of low strength within the laminate. Moreover, straight edged ply drops 12 produce an abrupt termination of the fibers 16 within a terminated ply 20. For example, as shown in FIGS. 1 and 2, when a terminated ply 20 includes unidirectional fibers 16 extending in a longitudinal direction 17 of the ply 20, all of the fibers 16 terminate at points 24 along the straight planar edge of the ply drop 12. Such a configuration substantially increases the stress concentration at the ply drop 12. In particular, a large interlaminar shear stress component is introduced as the tensile load capability of the each of the fibers 16 decreases to zero at the straight edge. As the tensile load capability of the fibers 16 reduces to zero, the shear load at the ply drop 12 is transferred to the weaker matrix material 18. As such, the conventional straight edged ply drop 12 results in a substantial reduction in the strength of the laminate 10 at the ply drop12, which can eventually lead to failure of the laminate 10 through delamination and/or cracking of the matrix material 18.

Accordingly, a modified ply drop that reduces stress concentrations within a laminate would be welcomed in the technology.

Various aspects and advantages of the invention will be set forth in part in the following description, or may be clear from the description, or may be learned through practice of the invention.

In one aspect, the present subject matter discloses a composite laminate material. The composite laminate material includes a plurality of adjacently disposed plies, with at least one of the plies being configured as a terminated ply. Additionally, a ply drop is defined by the terminated ply. The ply drop includes at least one tooth extending into the terminated ply, wherein the tooth is defined by a pair of side surfaces extending from an end surface.

In another aspect, the present subject matter discloses a composite laminate material including a plurality of adjacently disposed plies. At least one of the plies is configured as a terminated ply. Additionally, a ply drop is defined by the terminated ply. The ply drop includes at least one curved protrusion extending across at least a portion of a width of the terminated ply.

In a further aspect, the present subject matter discloses a composite laminate material including a plurality of adjacently disposed plies, with at least one of the plies being configured as a terminated ply. Additionally, a ply drop is defined by the terminated ply that includes at least one projection extending a depth into the terminated ply, wherein the at least one projection has a depth to width ratio of greater than 3:1.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention, and in the drawings:
FIG. 1 illustrates a partial, side view of a laminate composite material including a ply drop;
FIG. 2 illustrates a perspective view of conventional ply drop geometry;
FIG. 3 illustrates a perspective view of an embodiment of a modified ply drop in accordance with aspects of the present subject matter;
FIG. 4 illustrates a partial, side view of an embodiment of a laminate composite material including the ply drop geometry illustrated in FIG. 3 in accordance with aspects of the present subject matter;
FIG. 5 illustrates a perspective view of another embodiment of a modified ply drop in accordance with aspects of the present subject matter;
FIG. 6 illustrates a partial, side view of an embodiment of a laminate composite material including the ply drop geometry illustrated in FIG. 5 in accordance with aspects of the present subject matter;
FIG. 7 illustrates a perspective view of a further embodiment of a modified ply drop in accordance with aspects of the present subject matter;
FIG. 8 illustrates a partial, side view of an embodiment of a laminate composite material including the ply drop geometry illustrated in FIG. 7 in accordance with aspects of the present subject matter;
FIG. 9 illustrates a partial, side view of an embodiment of a laminate material including an even further embodiment of a modified ply drop in accordance with aspects of the present subject matter;
FIG. 10 illustrates an enlarged view of the modified ply drop illustrated in FIG. 9; and,
FIG. 11 illustrates a partial, side view of a laminate composite material including a gap joint.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is generally directed to composite laminate materials ("laminates") including modified ply drops configured to reduce stress concentrations within the laminate. For example, it is believed that, by spreading out the termination points of the fibers disposed within a terminated ply, a significant reduction in the stress concentration can be achieved. In particular, the spreading out of the fiber termination points enables the stress transfer between the terminated ply and the matrix material and/or any adjacent plies to be distributed over a longer distance, thereby resulting in an increase in the strength of the laminate in the area of the ply drop. Such increases in strength may enable components formed from the laminates of the present subject matter to have a reduced size/thickness without compromising the structural integrity of the component. Accordingly, a significant material and cost savings can be achieved.

Without wishing to be bound by any particular theory, it is believed that the effect of the stress concentration resulting from the inclusion of a ply drop is significantly diminished at a certain depth into a terminated ply. In particular, given that the tensile load capability of the each of the fibers is reduced to zero at the ply drop, the shear load typically carried by the fibers is transferred to the matrix material surrounding the terminated fibers. However, at a particular depth into the terminated ply, the interlaminar shear stresses are not as predominate and, thus, the interlaminar shear strength of the fibers is sufficient to carry the load. Accordingly, referring back to FIG. 2, it is believed that the increased stress due the abrupt termination of the fibers at the ply drop becomes negligible at a particular ply drop influenced depth 26. As such, the inventors of the present subject matter believe that a significant reduction in stress, as well as a significant increase in strength, can be achieved by distributing the fiber terminations within the terminated ply at various points along this ply drop influenced depth 26.

It should be appreciated that the particular ply drop influenced depth 26 for any given laminate material/laminate component may generally vary depending on numerous factors including, but not limited to, the failure criteria of the particular laminate/component being analyzed, the dimensions of the terminated ply, the modulus of elasticity of the fibers and the interlaminar shear strength of the fibers. However, it has been found that, assuming various failure conditions, the ply drop influenced depth 26 is generally equal to a depth into the terminated ply greater than about 10 millimeters (mm). Thus, in on embodiment, the ply drop influenced depth 26 may range from about 10 mm to about 70 mm, such as from about 10 mm to about 30 mm or from about 18 mm to about 30 mm and all other subranges therebetween. It should be appreciated, however, that is foreseen that, depending on many of the factors described above, the ply drop influence depth 26 may be less than about 10 mm, such as from about 1 mm to about 9 mm.

Generally, the modified ply drops of the present subject matter will be described herein with respect to laminates including longitudinally extending unidirectional fibers. Since plies including unidirectional fibers may generally have a strength and stiffness two-to-four times greater than that of biaxial, trixial, or mat plies, the loads transferred from a unidirectional ply to any adjacent matrix material as a result of the fiber terminations at a ply drop may be significantly higher than the loads transferred from other types of plies. As such, laminates including unidirectional fibers may be much more susceptible to failure due to cracking of the matrix material or delamination as such higher loads are transferred to the relatively low-strength matrix material. Similar logic applies to the use of carbon fibers as reinforcement materials. Since carbon plies are generally stronger than fiberglass plies, a significantly larger load is transferred at a ply drop from a carbon ply to the adjacent matrix material. Accordingly, it may be particularly desirable to apply the modified ply drops of the present subject matter to laminates including unidirectional, carbon fibers.

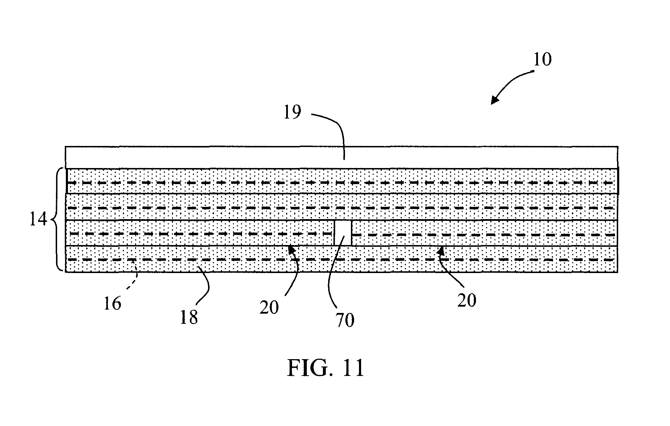

However, it should be appreciated that the scope of the disclosed technology need not be limited to laminates including unidirectional, carbon fibers. Rather, the present subject matter is generally applicable to any type and/or configuration of composite laminate material known in the art. Thus, the present disclosure can be applied to laminate materials including any suitable type of ply, such as fabric plies or pre-preg plies, and including any suitable reinforcement and matrix materials. Similarly, laminate materials within the scope of the present subject matter may be formed from any suitable manufacturing process, such as an infusion process, a vacuum bag molding pre-preg process, a resin transfer molding process, a vacuum assisted resin transfer molding process or other suitable processes. Moreover, reinforcement materials utilized within the laminate materials of the present subject matter may be woven or non-woven and may be disposed within each ply at any suitable angle and/or orientation. For example, suitable ply orientations may include unidirectional, biaxial, triaxial, and the like. Further, the modified ply drops described herein can be applied to both internal and external ply drops, as well as to the splice or gap joints described below in reference to FIG. 11.

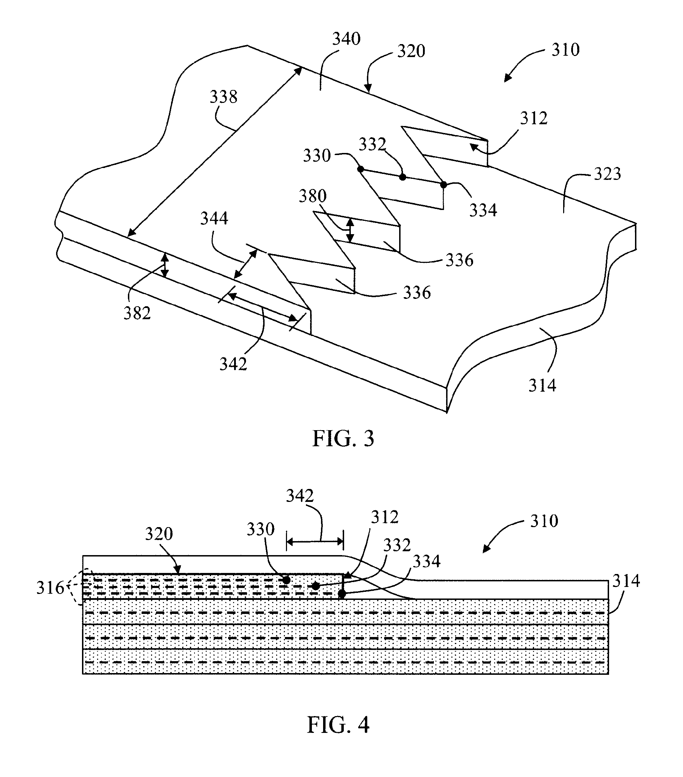

Referring now to FIGS. 3 and 4, one embodiment of a laminate composite material 310 having a modified ply drop 312 is illustrated in accordance with aspects of the present subject matter. In particular, FIG. 3 illustrates a perspective view of an embodiment of a terminated ply 320 which generally defines the modified ply drop 312. FIG. 4 illustrates a partial, side view of the laminate 310, particularly illustrating various distributed fiber termination points 330,332,334 within the terminated ply 320.

As particularly shown in FIG. 3, the terminated ply 320 generally defines a diagonalized ply drop 312. The diagonalized ply drop 312 may include one or more projections or angled surfaces 336 projecting or extending into the terminated ply 320 so as to form a continuous zig-zag pattern across the width 338 of the terminated ply 320. Additionally, as shown, the angled surfaces 336 may generally be defined through the terminated ply 320 such that each angled surface 336 extends from the outer surface 323 of an adjacent ply 314 to the outer surface 340 of the terminated ply 320. In one embodiment, the angled surfaces 336 may extend substantially perpendicularly from the outer surface 323 of the adjacent ply 314. Alternatively, the angles surfaces 336 may extend at an acute or obtuse angle from the outer surface 323.

The angled surfaces 336 may generally define a depth 342 and a transverse width 344. Depending on the width 338 of the terminated ply 320 and the transverse width 344 of the angled surfaces 336, it should be appreciated that any number angled surfaces 336 may be defined within the terminated ply 320. It should also be appreciated that the angled surfaces 336 may generally extend into the terminated ply 320 at any suitable depth 342. However, in a particular embodiment, the depth 342 of the angled surfaces 336 may be substantially equal to the ply drop influenced depth 26 (FIG. 2) at which the stress concentration due to the inclusion of a ply drop generally becomes negligible. For example, in various embodiments, the depth 342 of the angled surfaces 336 may be greater than about 10 mm, such as from about 10 mm to about 70 mm or from about 10 mm to about 30 mm or from about 18 mm to about 30 mm. In an alternative embodiment, it should be appreciated that each of the angled surfaces 336 may have a varying depth 342 to width 344 ratio.

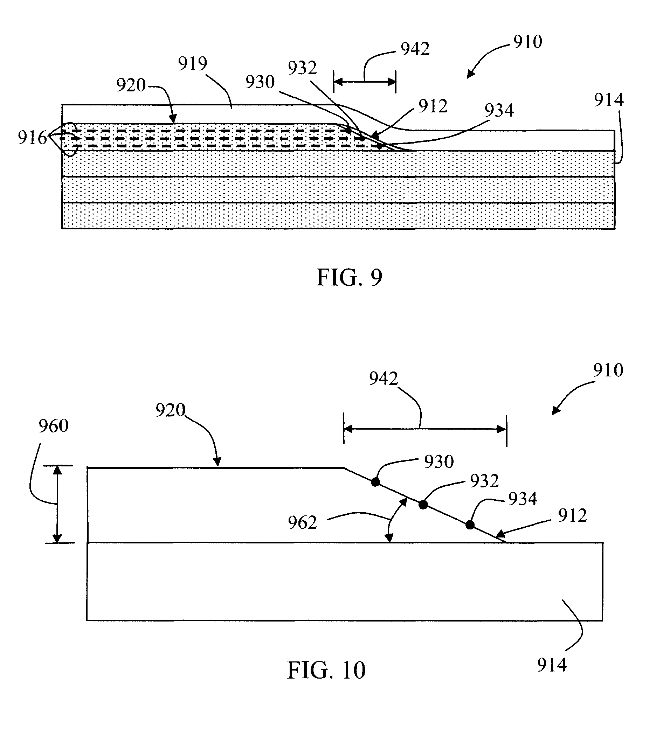

The angled surfaces 336 may further define a height 380. In one embodiment, the height 380 of each angled surface 336 may generally be equal to the height 382 of the terminated ply 320. Alternatively, the height 380 of one or more of the angled surfaces 336 may be greater or less than the height 382 of the terminated ply 320. Additionally, in a further embodiment, the height 380 of one or more of the angled surfaces 336 may reduce or taper across at least a portion of depth 342. For example, similar to the embodiment described below with reference to FIGS. 9 and 10, the height 380 of the angled surfaces 336 may increase at a taper angle 962 (FIG. 10) as each angled surface 336 extends into the terminated ply 320.

Due to the configuration of the diagonalized ply drop 312, it should be appreciated that the termination points 330,332,334 of the fibers 316 may be distributed or spread out along the terminated ply 320 as the depth of the diagonalized ply drop 312 varies. For example, as shown in FIGS. 3 and 4, the diagonalized ply drop 312 enables the fiber terminations to be disposed at numerous points 330,332,334 along the ply drop 312 representing varying depths into the terminated ply 320. Accordingly, the stresses created at the ply drop 312 can be distributed over a wider area, resulting in a slower gradient of stress concentration at the ply drop 312. It should be appreciated that the fiber termination points 330,332,334 shown in FIGS. 3 and 4 simply represent examples of the locations at which the fibers 316 may terminate within the terminated ply 320. Generally, the fibers 316 may terminate at any point along the angled surfaces 316.

Additionally, in a particular embodiment of the present subject matter, it may be preferable for each angled surface 336 to be configured to have a relatively small width 344 in order to increase the number of angled surfaces 336 that can be defined across the entire width 338 of the terminated ply 320. For example, in one embodiment, the depth 342 to width 344 ratio of each angled surface 336 may generally be greater than 3:1, such as about 3.3:1 to about 10:1 or from about 4:1 to about 5:1. By increasing the number of the angled surfaces 336, it is believed that a more uniform stress distribution can be achieved between the terminated ply 320 and the outer surface 323 of the adjacent ply 314. As such, any loads carried by the matrix material disposed between the terminated ply 320 and the adjacent ply 314 may be less concentrated, resulting in reduced interlaminar stresses between the plies.

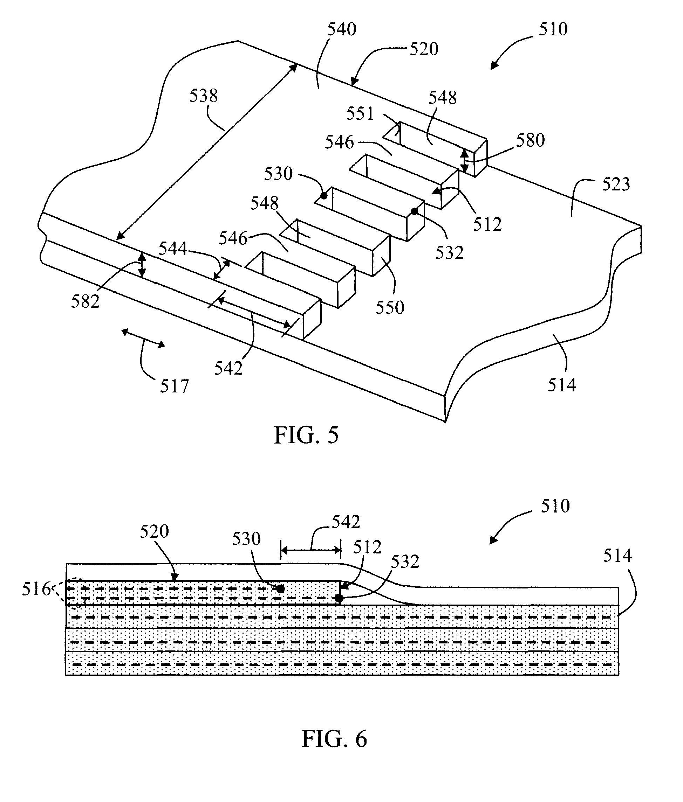

Referring now to FIGS. 5 and 6, another embodiment of a laminate composite material 510 having a modified ply drop 512 is illustrated in accordance with aspects of the present subject matter. In particular, FIG. 5 illustrates a perspective view of a terminated ply 520 which generally defines the modified ply drop 512. FIG. 6 illustrates a partial, side view of the laminate 510, particularly illustrating various fiber termination points 530,532 within the terminated ply 520.

As particularly shown in FIG. 5, the terminated ply 520 generally defines a toothed ply drop 512. The toothed ply drop 512 may include one or more projections or teeth 546 extending into the terminated ply 520. In one embodiment, a plurality teeth 546 may be defined in the terminated ply 520 so as to form a continuous tooth or comb pattern across the width 538 of the terminated ply 520. Each tooth 546 may be defined by a pair of side surfaces 548 extending into the terminated ply 320 from an end surface 550. Additionally, when the toothed ply drop 512 includes a plurality of teeth 546, the teeth 546 may be separated from one another by a plurality of connector surfaces 551.

As shown, the end surfaces 550 and the connector surfaces 551 generally comprise planar surfaces disposed substantially transverse to the longitudinal direction 517 of the terminated ply 520. However, it should be appreciated that both the end and connector surfaces 550,551 may generally be disposed at any angle relative to the longitudinal direction 517 of the terminated ply 520. For example, in one embodiment, the end surface 550 may be angled towards or away from the connector surface 551. Additionally, it should be appreciated that the end surfaces 550 and/or the connector surfaces 551 may be configured as non-planar surfaces. For instance, in one embodiment, the end surfaces 550 may be configured as a curved or rounded surface. Alternatively, the end surfaces 550 may include angled or filleted corners. Further, as shown in FIG. 5, the side surfaces 548 may be configured to extend substantially parallel to the longitudinal direction 517 of the terminated ply 520. Alternatively, it should be appreciated that the inwardly extending side surfaces 548 may be configured to extend into the terminated ply 520 at any suitable angle relative to the longitudinal direction 517. For example, in one embodiment, the side surfaces 548 may be disposed at an angle similar to that of the angled surfaces 336 described above with reference to FIG. 3. In such an embodiment, it should be appreciated that the toothed ply drop 312 need not include connector surfaces 551, as the side surfaces 548 may be configured to intersect at a certain depth into the terminated ply 520.

Each of the teeth 546 may also define a depth 542 and a transverse width 544 corresponding to the width of the edge surfaces 550. Depending on the width 538 of the terminated ply 520 and the transverse width 544 of the edge surfaces 550, it should be appreciated that any number of teeth 546 may be defined within the terminated ply 520. It should also be appreciated that the teeth 546 may generally extend into the terminated ply 520 at any suitable depth 542. However, in a particular embodiment, the depth 542 of each of the teeth 546 may be equal to the ply drop influenced depth 26 (FIG. 2) at which the stress concentration due to the inclusion of a ply drop generally becomes negligible. For example, in various embodiments, the depth 542 of each of the teeth 546 may be greater than about 10 mm, such as from about 10 mm to about 70 mm or from about 10mm to about 30 mm or from about 18 mm to about 30 mm. In an alternative embodiment, it should be appreciated that the size or depth 542 to width 544 ratio of the teeth 546 may vary across the width 538 of the terminated ply 520. For example, the toothed ply drop 512 may include one or more small teeth 546 nested within one or more large teeth 546.

The teeth 546 may further define a height 580. In one embodiment, the height 580 of each tooth 546 may generally be equal to the height 582 of the terminated ply 520. Alternatively, the height 580 of one or more of the teeth 546 may be greater or less than the height 582 of the terminated ply 520. Additionally, in a further embodiment, the height 580 of one or more of the teeth 546 may reduce or taper across the depth 542 of the teeth 546. For example, similar to the embodiment described below with reference to FIGS. 9 and 10, the height 580 of the teeth 546 may increase at a taper angle 962 (FIG. 10) as each tooth 546 extends into the terminated ply 520.

Similar to the embodiment described above, due to the configuration of the toothed ply drop 512, the point at which the fibers 516 terminate within the terminated ply 520 may be varied. For example, with reference to FIGS. 5 and 6, the toothed ply drop 512 may enable some of the fibers 516 of the terminated ply 520 to terminate at points 530 located at a depth 542 into the terminated ply 520, with the remainder of the fibers 516 terminating at points 532 located at the end of the terminated ply 520. As such, any stresses created due to the inclusion of the ply drop 512 within the laminate 510 can be distributed over a wider area, resulting in a lower magnitude of stress concentration at the ply drop 512.

Additionally, in one or more embodiments of the present subject matter, each of the teeth 546 may be configured to have a relatively small width 544 to increase the number of teeth 546 that can be defined across the width 538 of the terminated ply 520. Additionally, the depth 542 of the each tooth 546 may also be increased in order to increase the spacing between the fiber termination points 530,532 of the fibers 516. Thus, in one embodiment, the depth 542 to width 544 ratio of each tooth 546 may generally be greater than about 1:1, such as from about 1:1 to about 10:1 or from about 2:1 to about 5:1 or from about 3:1 to 5:1. By increasing both the number of the teeth 546 and the distance between the fiber termination points 530,532, it is believed that a more uniform stress distribution may be achieved between the terminated ply 520 and any adjacently disposed plies 514. As such, any loads carried by the matrix material disposed between the terminated ply 514 and the adjacent plies 514 may be less concentrated, resulting in reduced interlaminar stresses between the plies.

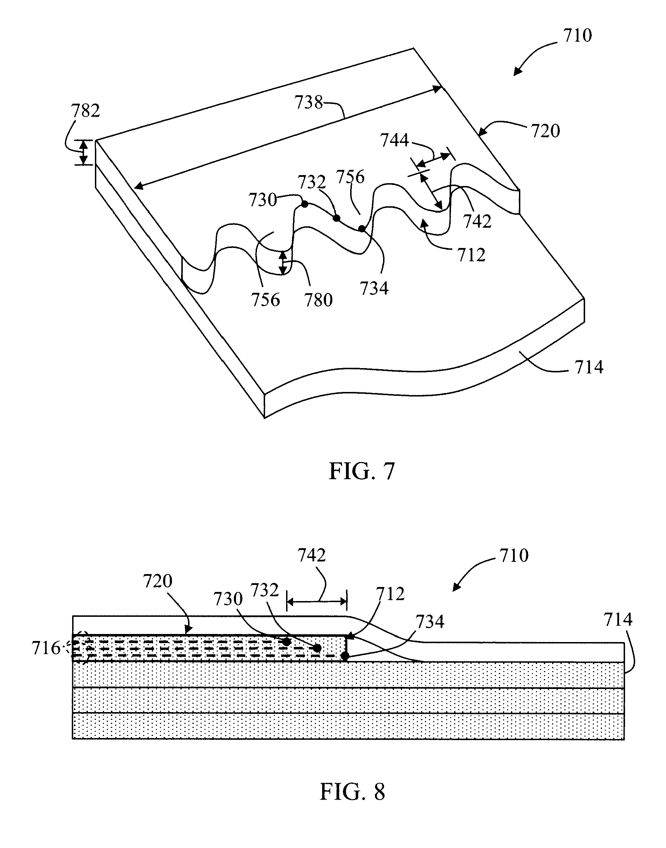

Referring now to FIGS. 7 and 8, a further embodiment of a laminate composite material 710 having a modified ply drop 712 is illustrated in accordance with aspects of the present subject matter. In particular, FIG. 7 illustrates a perspective view of the terminated ply 720 which generally defines the modified ply drop 712. FIG. 8 illustrates a partial, side view of the laminate 710, particularly illustrating various fiber termination points 730,732,734 within the terminated ply 720.

As particularly shown in FIG. 7, the terminated ply 720 generally defines a curved ply drop 712. In particular, the curved ply drop 712 may generally be characterized by a rounded or curved surface/profile extending across the width 738 of the terminated ply 720. In one embodiment, a plurality of projections or curved protrusions 756 may be defined within the terminated ply 720 so as to form a continuous curved zig-zag pattern across the width 738 of the terminated ply 720. In an alternative embodiment, the curved ply drop 712 may be configured as a single arc or curved protrusion extending across the width 738 of the terminated ply 720.

Each of the curved protrusions 756 may generally define a depth 742 and a transverse width 744. The transverse width 744 may be defined across a half-cycle of each curved protrusion 756 and, thus, may be measured between the peak and valley of each protrusion 756. Depending on the width 738 of the terminated ply 720 and the transverse width 744 of the curved protrusions 756, it should be appreciated that any number of protrusions 756 may be defined within the terminated ply 720. It should also be appreciated that the curved protrusions 756 may generally extend into the terminated ply 720 at any suitable depth 742. However, in a particular embodiment, the depth 742 of each of the protrusions 756 may be equal to the ply drop influenced depth 26 (FIG. 2) at which the stress concentration due to the inclusion of a ply drop generally becomes negligible. For example, in various embodiments, the depth 742 of each of the protrusions 756 may be greater than about 10 mm, such as from about 10 mm to about 70 mm or from about 10mm to about 30 mm or from about 18 mm to about 30 mm. In an alternative embodiment, it should be appreciated that the size or depth 742 to width 744 ratio of the curved protrusions 756 may vary across the width 738 of the terminated ply 720. For example, in a particular embodiment, the curved ply drop 712 may include one or more small protrusions 756 nested within one or more large protrusions 756.

The curved protrusions 756 may also define a height 780. In one embodiment, the height 780 of each protrusion 756 may generally be equal to the height 782 of the terminated ply 720. Alternatively, the height 780 of one or more of the curved protrusions 756 may be greater or less than the height 782 of the terminated ply 720. Additionally, in a further embodiment, the height 780 of one or more of the curved protrusions 780 may reduce or taper across the depth 742 of the protrusion. For example, similar to the embodiment described below with reference to FIGS. 9 and 10, the height 780 of the curved protrusions 756 may increase at a taper angle 962 (FIG. 10) as each protrusion 756 extends into the terminated ply 720.

Similar to the embodiments described above, due to the configuration of the curved ply drop 712, the termination points 730,732,734 of the fibers 716 may be distributed or spread out as the depth of the ply drop 712 into the terminated ply 720 varies. For example, with reference to FIGS. 7 and 8, the curved ply drop 712 may enable the fiber terminations to be disposed at numerous points 730,732,734 along the ply drop 712 representing varying depths into the terminated ply 720. As such, any stresses created at the ply drop 712 can be distributed over a wider area, resulting in a slower gradient of stress concentration at the ply drop 712. It should be appreciated that the fiber termination points 730,732,734 shown in FIGS. 7 and 8 simply represent examples of the locations at which the fibers 716 may terminate within the terminated ply 720. Generally, the fibers 716 may terminate at any point along the curved ply drop 712.

Additionally, in several embodiments of the present subject matter, each of the curved protrusions 756 may be configured to have a relatively small width 744 in order to increase the number of protrusions 756 the can be defined across the entire width 738 of the terminated ply 720. For example, in one embodiment, the depth 742 to width 744 ratio of each curved protrusion 756 may be greater than about 1:1, such as from about 1:1 to about 10:1 1 or from about 2:1 1 to about 5:1 1 or from about 3:1 1 to about 5:1. By increasing the number of the curved protrusions 756, it is believed that a more uniform stress distribution can be achieved between the terminated ply 720 and any adjacent plies 714. As such, any loads carried by the matrix material disposed between the terminated ply 720 and adjacent plies 714 may be less concentrated, resulting in reduced interlaminar stresses between each of the plies.

It should be appreciated that the modified ply drops described in reference to FIGS. 3-8 may generally be formed or manufactured by any suitable means. For example, the modified ply drops may be formed by cutting the desired shape or profile (e.g. a curved, diagonalized, or toothed cut) out of the terminated ply using a pair of scissors. Alternatively, a mechanical press or any other suitable cutting mechanism may be used to form the modified ply drops. Various other suitable methods for creating the modified ply drops of the present subject matter should be apparent to those of ordinary skill in the art.

Referring now to FIGS. 9 and 10, a further embodiment of a laminate composite material 910 having a modified ply drop 912 is illustrated in accordance with aspects of the present subject matter. In particular, FIG. 9 illustrates a partial, side view of the laminate material 910. FIG. 10 illustrates an enlarged view of the modified ply drop 912 illustrated in FIG. 9.

As shown in FIGS. 9 and 10, the terminated ply 920 generally defines a tapered ply drop 912. In particular, the tapered ply drop 912 is configured such that a height 960 of the terminated ply 920 progressively decreases at the ply drop 912. Thus, it should be appreciated that the tapered ply drop 912 may generally define any suitable taper angle 962 such that the height 960 of the terminated ply 920 steadily reduces across any suitable depth 942 into the terminated ply 920. However, in one embodiment, the taper angle 962 may be chosen such that the terminated ply 920 is tapered a depth 942 into the ply 920 equal to the ply drop influenced depth 26 (FIG. 2). Thus, the tapered ply drop 912 may generally extend into the terminated ply 920 at a depth 942 of greater than about 10 mm, such as from about 10 mm to about 70 mm or from about 10mm to about 30 mm or from about 18 mm to about 30 mm. While the taper angle 962 corresponding to such depth 942 will generally vary depending on the height 960 of the terminated ply drop 920, it has been found that a taper angle 962 of less than 10 degrees, such as from about 1 degree to about 9 degrees or from about 2 degrees to about 6 degrees, may be suitable to significantly reduce the stress concentration at the ply drop 912.

Due to the configuration of the tapered ply drop 912, the termination points 930,932,934 of the fibers 916 may be distributed at various depths within the terminated ply 920 as the ply drop 912 tapers upwardly. For example, with reference to FIGS. 9 and 10, the tapered ply drop 912 may enable the fiber terminations to be disposed at numerous points 930,932,934 along the ply drop 912 representing varying depths into the terminated ply 920. As such, any stresses created due to the inclusion of the ply drop 912 within the laminate can be distributed over a wider area, resulting in a lower magnitude of stress concentration at the ply drop. It should be appreciated that the fiber termination points 930,932,934 shown in FIGS. 9 and 10 simply represent examples of the locations at which the fibers 916 may terminate within the terminated ply 920. Generally, the fibers 916 may terminate at any point along the tapered ply drop 912.

Moreover, because of the tapered construction, the gap 22 (FIG. 1) typically created between a ply drop and any adjacent plies 914 may be at least partially filled in by the terminated ply 920. Specifically, as shown in FIG. 9, the tapered ply drop 912 may be configured to substantially match the profile of the cover ply 919 as the thickness of the laminate 910 is tapered or reduced at the ply drop 912. As such, the tapered ply drop 912 may enable the structural discontinuity typically created at a ply drop to be reduced or eliminated, thereby reducing or eliminating the creation of a low-strength area adjacent to the ply drop 912 and also reducing the amount stress concentration present at the ply drop 912.

It should be appreciated that the tapered ply drop 912 may generally be formed within the terminated ply 920 by any suitable means. In one embodiment, various cutting mechanisms, such as a water jet cutter, saw, knife or any other suitable cutting device, may be used to create the taper within the terminated ply 920. Alternatively, the tapered ply drop 912 may be formed from grinding or sanding down the terminated ply 20, such by using sand paper, a grinding stone or any other abrasive material. Various other suitable methods for creating the tapered ply drop 912 of the present subject matter should be apparent to those of ordinary skill in the art.

One of ordinary skill in the art should appreciate that the modified ply drops may also be characterized by a percent increase in the cross-sectional area or surface area that occurs as a result of the creation of a toothed ply drop 312, a rounded ply drop 512, a diagonalized ply drop 712 or a tapered ply drop 912 within a terminated ply. In particular, assuming a baseline surface area equal to the surface area of a straight-edged conventional ply drop (i.e., the product of the width 38 of the terminated ply 20 times the height 80), the disclosed modified ply drops may generally result in a percent increase in the surface area of a ply drop over the baseline surface area of greater than about 50%. As such, the fiber terminations of the terminated ply may be spread out over a significantly larger area and, thus, the stress concentration within the laminate may be reduced. In a particular embodiment of the present subject matter, the percent increase in surface area over the baseline surface area may be greater than about 475%, such as from about 500% to about 5000% or from about 500% to about 2750% or from about 850% to about 1500%.

It should also be appreciated that the modified ply drops disclosed herein may also be applied to splice or gap joints. A laminate material 10 including gap joint 70 is illustrated in FIG. 11. Generally, the laminate 10 includes a plurality of adjacently disposed internal plies 14 stacked one on top of the other and a cover ply 19 serving as the outer covering for the laminate 10. Each ply 14 generally includes a plurality of fibers 16 (only one is illustrated for purposes of clarity) surrounded by and supported within a matrix material 18. Additionally, as shown, a gap joint 70 is defined between two terminating plies 20 of the laminate 10. Such a joint 70 is typically created when the roll of ply material being used to create the laminate 10 runs out. Thus, the length of the remaining ply may not be sufficient to cover the distance needed within the tool or mold. To cover the remaining distance, a second roll of ply must be inserted into the mold. Accordingly, as illustrated in FIG. 11, a gap joint 70 may be defined between the two adjacently disposed plies. Moreover, because each of the plies are terminated plies 20, the tensile load capability of the fibers 16 within each terminated ply 20 is reduced to zero at the gap joint 70, thereby introducing a stress concentration at the joint 70. As such, it should be appreciated that any of the modified ply drop described herein may be applied to each of the terminated plies 20 in order to reduce the stress concentration at the gap joint 70.

Further, it should be appreciated that application of the present subject matter need not be limited to the single ply drop configurations described and illustrated herein. For example, other forms of ply drop configurations may include multiple ply drops staggered or disposed one on top of the other. In particular, two, three or more terminated plies may be adjacently disposed to create a multiple ply drop. One skilled in the art should appreciate that the modified ply drops described herein can be applied to such multiple ply drops.

Additionally, it should be appreciated that the various embodiments described herein need not be applied in isolation. Rather, any suitable combination of the disclosed ply drops may be utilized to reduce stress concentrations within a laminate material. For example, the tapered ply drop 912 described in reference to FIGS. 9 and 10 may be combined with any of the ply drops embodiments described in reference to FIGS. 3-8.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A composite laminate material, comprising:
   a plurality of adjacently disposed plies, at least one of the plies being configured as a terminated ply; and,
   a ply drop defined by the terminated ply, the ply drop including at least one tooth extending into the terminated ply,
   wherein the at least one tooth is defined by a pair of side surfaces extending from an end surface.
2. The composite laminate material of clause 1, wherein the at least one tooth has a depth to width ratio of greater than about 1:1.
3. The composite laminate material of any preceding clause, wherein the at least one tooth extends a depth into the terminated ply of greater than about 10 mm.
4. The composite laminate material of any preceding clause, wherein the at least one tooth has a tapered height.
5. The composite laminate material of any preceding clause, wherein the height is tapered at a taper angle of less than 10 degrees.
6. The composite laminate material of any preceding clause, wherein the pair of side surfaces extend from the end surface substantially parallel to a longitudinal direction of the terminated ply.
7. The composite laminate material of any preceding clause, wherein the end surface is disposed substantially transverse to a longitudinal direction of the terminated ply.
8. The composite laminate material of any preceding clause, wherein the end surface is configured as a non-planar surface.
9. A composite laminate material, comprising:
   a plurality of adjacently disposed plies, at least one of the plies being configured as a terminated ply; and,
   a ply drop defined by the terminated ply, the ply drop including at least one curved protrusion extending across at least a portion of a width of the terminated ply.
10. The composite laminate material of any preceding clause, wherein the at least one curved protrusion has a depth to width ratio of greater than about 1:1.
11. The composite laminate material of any preceding clause, wherein the at least one curved protrusion extends a depth into the terminated ply of greater than about 10 mm.
12. The composite laminate material of any preceding clause, wherein the at least one curved protrusion has a tapered height.
13. The composite laminate material of any preceding clause, wherein the height is tapered at a taper angle of less than 10 degrees.
14. The composite laminate material of any preceding clause, wherein the ply drop includes a plurality of curved protrusions.
15. A composite laminate material, comprising:
   a plurality of adjacently disposed plies, at least one of the plies being configured as a terminated ply; and,
   a ply drop defined by the terminated ply, the ply drop including at least one projection extending a depth into the terminated ply,
   wherein the at least one projection has a depth to width ratio of greater than 3:1.
16. The composite laminate material of any preceding clause, wherein the at least one projection comprises at least one tooth.
17. The composite laminate material of any preceding clause, wherein the at least one projection comprises at least one curved protrusion.
18. The composite laminate material of any preceding clause, wherein the at least one projection comprises at least one angled surface.
19. The composite laminate material of any preceding clause, wherein the at least one projection defines a tapered height, the height being tapered at a taper angle of less than 10 degrees.
20. The composite laminate material of any preceding clause, wherein the depth at which the at least one projection extends into the terminated ply is greater than about 10 mm.

## Claims

1. A composite laminate material (510), comprising:
a plurality of adjacently disposed plies (514), at least one of the plies (514) being configured as a terminated ply (520); and
a ply drop (512) defined by the terminated ply (520), the ply drop (512) including at least one tooth (546) extending into the terminated ply (520),
wherein the at least one tooth (546) is defined by a pair of side surfaces (548) extending from an end surface (550).

2. The composite laminate material (510) as in the preceding claim, wherein the at least one tooth (546) has a depth to width ratio of greater than about 1:1.

3. The composite laminate material (510) as in any of the preceding claims, wherein the at least one tooth (546) has a tapered height.

4. The composite laminate material (510) as in claim 3, wherein the height is tapered at a taper angle (962) of less than 10 degrees.

5. The composite laminate material (510) as in any preceding claim, wherein the pair of side surfaces (548) extend from the end surface (550) substantially parallel to a longitudinal direction (517) of the terminated ply (520).

6. The composite laminate material (510) as in any preceding claim, wherein the end surface (550) is disposed substantially transverse to a longitudinal direction (517) of the terminated ply (520).

7. A composite laminate material (710), comprising:
a plurality of adjacently disposed plies (714), at least one of the plies (714) being configured as a terminated ply (720); and
a ply drop (712) defined by the terminated ply (720), the ply drop (712) including at least one curved protrusion (756) extending across at least a portion of a width (738) of the terminated ply (720).

8. The composite laminate material (710) as in claim 7, wherein the at least one curved protrusion (756) has a depth to width ratio of greater than about 1:1.

9. The composite laminate material (710) as in claim 7 or claim 8, wherein the at least one curved protrusion (756) has a tapered height.

10. The composite laminate material as in claim 9, wherein the height is tapered at a taper angle (962) of less than 10 degrees.

11. A composite laminate material (310, 510, 710), comprising:
a plurality of adjacently disposed plies (314, 514, 714), at least one of the plies (314, 514, 714) being configured as a terminated ply (320, 520, 720); and
a ply drop (312, 512, 712) defined by the terminated ply (320, 520, 720), the ply drop (312, 512, 712) including at least one projection (336, 546, 756) extending a depth (342, 542, 742) into the terminated ply (325, 520, 720),
wherein the at least one projection (336, 546, 756) has a depth to width ratio of greater than 3:1.

12. The composite laminate material (310, 510, 710) as in claim 11, wherein the at least one projection (336, 546, 756) comprises at least one tooth (546).

13. The composite laminate material (310, 510, 710) as in claim 11 or claim 12, wherein the at least one projection (336, 546, 756) comprises at least one curved protrusion (756).

14. The composite laminate material (310, 510, 710) as in any of claims 11 to 13, wherein the at least one projection (336, 546, 756) comprises at least one angled surface (336).

15. The composite laminate material (310, 510, 710) as in any one of claims 11 to 14, wherein the at least one projection (310, 510, 710) defines a tapered height, the height being tapered at a taper angle (962) of less than 10 degrees.
